# EUROPÄISCHE PATENTANMELDUNG

(11) **EP 1 079 210 A2**
(43) Veröffentlichungstag der Anmeldung: **28.02.2001**
(21) Anmeldenummer: 00116458.1
(22) Anmeldetag: 29.07.2000
(51) Int. Cl.: G01F 1/06

(54) **Durchflussmessgerät**

(30) Priorität: 20.08.1999 DE 19939177
(71) Anmelder: Siemens Building Technologies AG, 8008 Zürich (CH)
(72) Erfinder: Wellendorf, Steffen, 99094 Erfurt (DE)

(57) **Zusammenfassung**

Die vorliegende Erfindung beschreibt ein Durchflussmessgerät (1) für strömende Medien, mit einer Einrichtung zur magnetischen Übertragung einer Messgrösse von einer Messkammer zu einem von der Messkammer abgetrennten Mess-System (8, 10, 11), wobei die Einrichtung zur magnetischen Übertragung mit einer Abschirmvorrichtung (12) gegenüber Störfeldern geschützt wird. Die Abschirmvorrichtung besteht aus einem Abschirmelement (12), welches aus einem die Einrichtung zur magnetischen Uebertragung (8, 10, 11) umgebenden Kragen und einer mit dem Kragen verbundenen Scheibe gebildet ist.

## Beschreibung

Die vorliegende Erfindung betrifft ein Durchflussmessgerät nach Anspruch 1.

Durchflussmessgeräte für strömende Medien werden seit langem mit einer Magnetanordnung versehen, mittels derer die Bewegung eines durch ein strömendes Medium angetriebenes Messrades berührungslos auf ein Messwerk übertragen wird. Das Messwerk kann dadurch vom strömenden Medium abgetrennt werden. Diese Messanordnung ist jedoch durch äussere Magnetfelder beeinflussbar, was zur Verfälschung des Messergebnisses führt. Um dies zu verhindern, wird deshalb die Magnetanordnung mittels Abschirmvorrichtungen gegenüber äusseren Magnetfeldern geschützt.

Derartige Verfahren und Vorrichtungen sind für unterschiedliche Zwecke und Anwendungen bereits bekannt. So ist beispielsweise aus der CH 426 290 eine Abschirm-Vorrichtung bekannt, die die Magnetanordnung mit einem zylindrischen Ring aus magnetisierbarem Metall umgibt. In der CH 426 290 wird nun zusätzlich zum Ring ein Boden und ein Deckel aus einem ferromagnetischen Material um die Magnetanordnung angeordnet. Der Ring und der Boden sind dabei als Gefäss ausgestaltet, in das die Messanornung eingeführt wird und welches mit dem Deckel verschlossen wird um die Messanordnung gegenüber Störfeldern zu schützen.

Aus der DE 298 06 191 U1 ist ein Durchflussmessgerät mit Magnetkupplung bekannt, bei dem zur Abschirmung der durchmagnetisierten, vierpoligen Ringmagnete mit einem Rückschlussring versehen sind und wobei die Magnetkupplung in einem radialen Abstand konzentrisch mit einer ferromagnetischen Ringscheibe umschlossen ist. Die Verwendung von Rückschlussscheiben und eines zusätzlichen Ringes erhöht jedoch die Produktionskosten und kann je nach Störmagnet unzuverlässig sein.

Der vorliegenden Erfindung liegt die Aufgabe zugrunde, Durchflussmessgeräte der eingangs genannten Art zur Verfügung zu stellen, welche eine kostengünstige und zuverlässige Messanordnung gewährleisten.

Die genannte Aufgabe wird erfindungsgemäss durch die in den unabhängigen Ansprüche angegebenen Merkmale gelöst.

Kern der Erfindung ist es somit, dass die Abschirmvorrichtung aus einem Abschirmelement besteht, welches aus einem die Einrichtung zur magnetischen Uebertragung umgebenden Kragen und einer mit dem Kragen verbundenen Scheibe gebildet ist.

Das so ausgestaltete Abschirmelement lässt sich kostengünstig realisieren und es wird damit eine optimale Abschirmwirkung gegen äussere Magnetfelder erreicht.

Weitere vorteilhafte Ausgestaltungen der Erfindung ergeben sich aus den abhängigen Ansprüchen.

Einige bevorzugte Ausführungsbeispiele der erfindungsgemässen Vorrichtung bzw. des erfindungsgemässen Verfahrens werden anhand der nachfolgenden Zeichnung näher erläutert, welche eine schematische Ansicht eines Durchflussmessgerätes im Schnitt zeigt.

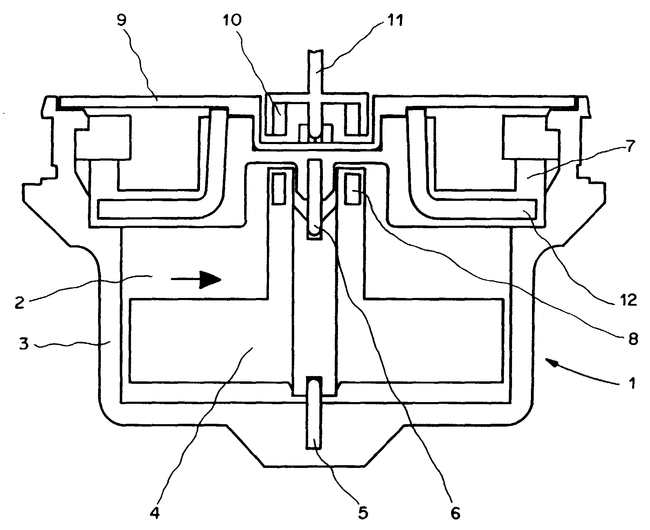

In der einzigen Figur ist schematisch ein Durchflussmessgerät 1 welches zum Messen strömender Medien, insbesondere Flüssigkeiten, verwendet wird dargestellt. Das Messgerät 1 besteht im wesentlichen aus einer Messkammer 2, die durch ein Messgehäuse 3 gebildet wird, welches eine Eintrittsöffnung und eine Austrittsöffnung für das strömende Medium aufweist, welche nicht dargestellt sind. In der Messkammer 2 ist ein als Flügelrad ausgebildeter Rotor 4 angeordnet, der durch das durch die Messkammer 2 strömende Medium, z.B. Wasser, in Rotation versetzt wird. Der Rotor 4 wird über Lagerzapfen 5 und 6 reibungsarm, senkrecht zur Strömungsrichtung gelagert. Die Messkammer wird über einen Messkammerdeckel 7 abgeschlossen. Der Lagerzapfen 5 ist im Boden des Messgehäuses 3 gelagert, der Lagerzapfen 6 ist im Messkammerdeckel 7 gelagert. In der Nabe des Rotors 4, im Bereich des Lagerzapfens 6 ist ein Ringmagnet 8 angeordnet, welcher sich somit dreht wenn der Rotor 4 durch ein strömendes Medium in Bewegung versetzt wird. Das nicht dargestellt Zählwerk wird auf dem Messgehäuse auf der Seite des Messkammerdeckels 7 mittels eines Zählwerksdeckels 9 montiert.

Dem Ringmagneten 8 steht koaxial ein Ringmagnet 10 gegenüber, der an einer Antriebswelle 11 befestigt ist, mittels derer das nicht dargestellte Zählwerk angetrieben wird. Nicht dargestellt ist auch die Möglichkeit, das Messwerk durch ein elektronisches Mess-System zu ersetzten. Diese elektronische Auswerteschaltung tastet beispielsweise die Drehbewegung des Ringmagneten 8 ab und es kann somit die Umdrehungsanzahl des Rotors 4 ermittelt werden. Bei der Verwendung eines elektronischen Mess-Systems wird die Antriebswelle 11 und der Ringmagnet 10 nicht benötigt.

Der Ringmagnet 8, und falls vorhanden der Ringmagnet 10, jeweils vorteilhafterweise als vierpoliger Ringmagnet ausgebildet, ist stirnseitig flächenmagnetisiert zum jeweils anderen Ringmagneten hin oder zum elektronischen Mess-System hin. Somit ist die Kupplungskraft zwischen den Magneten grösser als bei axial durchmagnetisierten Magneten. Weiterhin werden die Feldlinien auf der jeweils kupplungsabgewandten Stirnseite des Magneten zum grossen Teil schon im Innern des Magneten geschlossen. Dadurch wird das Streufeld sehr klein und eine Rückschluss-Scheibe wird nicht benötigt.

Im Messkammerdeckel 7 ist ein Abschirmelement 12 eingelassen, welches einstückig als Scheibe mit einem die Magnetanordnung abschirmenden Kragen ausgebildet ist. Die beiden Ringmagnete 8, 10 und / oder das elektronische Mess-System sollten weitesgehend vom Kragen umschlossen und innerhalb des Kragens angeordnet werden.
Vorteilhafterweise wird das Abschirmelement 12 mit einem Kunststoff umspritzt und so direkt der Messkammerdeckel hergestellt. Möglich wäre jedoch auch eine Anordnung des Abschirmelementes auf dem Messkammerdeckel. Als Material für das Abschirmelement kann beispielsweise weichmagnetischer Edelstahl, wärmebehandelt oder Reineisen, galvanisch verzinkt verwendet werden. Durch die gewählte Ausgestaltung des Abschirmelements wird einerseits die Magnetanordnung direkt vor Störmagneten abgeschirmt. Durch die scheibenförmige Erweiterung und den grossen Aussendurchmesser kann ein Störmagnet auch seitlich nicht die Magnetanordnung beeinflussen. Die scheibenfdrmige Erweiterung wirkt dabei als Ersatzweg für das Störfeld und leitet die Feldlinien an der Messanordnung vorbei, der weiter innen liegende Kragen bietet eine Abschirmung gegenüber dem restlichen Störfeld. Somit kann auch bei Störfeldern, welche sehr nahe an die Magnetanordnung gelangen, eine Beeinflussung der Magnetanordnung und somit des Messergebnisses verhindert werden, da auch jeweils der Abstand des Störfeldes zum grossflächigen Abschirmelement sehr klein ist. Durch die Integration des Abschirmelementes in den Messkammerdeckel 7 wird zudem eine sehr platzsparende, kompakte Konstruktion erzielt. Weiter wird die Steifigkeit und somit die Sicherheit des Messkammerdeckels erhöht.

Selbstverständlich ist die Erfindung nicht auf die gezeigten und beschriebenen Ausführungsbeispiele beschränkt.

## Patentansprüche

1. Durchflussmessgerät (1) für strömende Medien, mit einer Einrichtung zur magnetischen Übertragung einer Messgrösse von einer Messkammer zu einem von der Messkammer abgetrennten Mess-System (8, 10, 11), wobei die Einrichtung zur magnetischen Übertragung mit einer Abschirmvorrichtung (12) gegenüber Störfeldern geschützt wird,
dadurch gekennzeichnet,
dass die Abschirmvorrichtung aus einem Abschirmelement (12) besteht, welches aus einem die Einrichtung zur magnetischen Uebertragung (8, 10, 11) umgebenden Kragen und einer mit dem Kragen verbundenen Scheibe gebildet ist.

2. Durchflussmessgerät nach Anspruch 1,
dadurch gekennzeichnet,
dass der Kragen und die Scheibe des Abschirmelementes (12) im wesentlichen senkrecht zueinander ausgebildet sind.

3. Durchflussmessgerät nach Anspruch 1 oder 2,
dadurch gekennzeichnet,
dass die Einrichtung zur magnetischen Uebertragung (8, 10, 11) sich weitesgehend innerhalb des Kragens des Abschirmelementes (12) befindet.

4. Durchflussmessgerät nach Anspruch 1, 2 oder 3,
dadurch gekennzeichnet,
dass das Abschirmelement als Messkammerdeckel ausgearbeitet ist.

5. Durchflussmessgerät nach einem der vorhergehenden Ansprüche,
dadurch gekennzeichnet,
dass das Abschirmelement mit einem Kunststoff umspritzt ist.

6. Durchflussmessgerät nach einem der vorhergehenden Ansprüche,
dadurch gekennzeichnet,
dass die Einrichtung zur magnetischen Übertragung einer Messgrösse auf der Seite der Messkammer aus einem Ringmagneten (8) besteht.

7. Durchflussmessgerät nach einem der vorhergehenden Ansprüche,
dadurch gekennzeichnet,
dass die Einrichtung zur magnetischen Übertragung einer Messgrösse auf der Seite des Mess-Systems aus einem Ringmagneten (8) besteht.

8. Durchflussmessgerät nach einem der vorhergehenden Ansprüche,
dadurch gekennzeichnet,
dass die Einrichtung zur magnetischen Übertragung einer Messgrösse auf der Seite des Mess-Systems elektronisch erfolgt.

9. Durchflussmessgerät nach Anspruch 6 oder 7,
dadurch gekennzeichnet,
dass der Ringmagnet (8) als vierpoliger Ringmagnet ausgebildet ist.

10. Durchflussmessgerät nach Anspruch 6, 7 oder 9,
dadurch gekennzeichnet,
dass der Ringmagnet stirnseitig flächenmagnetisiert ist.
